# FASCICULE DE BREVET EUROPEEN

(11) **EP 0 556 087 B1**
(45) Date de publication et mention de la délivrance du brevet: **04.08.1999**
(21) Numéro de dépôt: 93400251.0
(22) Date de dépôt: 02.02.1993
(51) Int. Cl.: C23F 11/12, C23F 11/14, C23F 11/10

(54) **Utilisation pour l'inhibition de la corrosion du cuivre d'une composition consistant en acide heptanörque ou un de ses dérivés et tétraborate de sodium.**
Verwendung zur inhibierung der Kupferkorrosion einer Zusammensetzung bestehend aus Heptansoiuce oder dessen Derivate und Natriumtetraborat.
Use of a composition consisting of heptanoie acid or a derivative thereof and sodium tetraborate as copper corrosion inhibitor.

(30) Priorité: 14.02.1992 FR 9201698; 26.11.1992 FR 9214233
(43) Date de publication de la demande: 18.08.1993
(73) Titulaire: ELF ATOCHEM S.A., 92800 Puteaux, Hauts-de-Seine (FR); HABER PARTNERS SARL, F-75017 Paris (FR)
(72) Inventeur: Caupin, Henri-Jean, F-78000 Versailles (FR); Seidl, Harry, F-16200 jarnac (FR); Steinmetz, Pierre, F-54500 Vandoeuvre (FR)
(74) Mandataire: Hirsch, Marc-Roger

(56) Documents cités:
- EP-A- 0 229 440
- EP-A- 0 251 480
- EP-A- 0 308 037
- EP-A- 0 479 470
- WO-A-92/01029
- FR-A- 2 010 155
- FR-A- 2 257 703
- FR-A- 2 275 568
- GB-A- 910 138
- GB-A- 961 409
- US-A- 4 687 634
- JOURNAL OF APPLIED CHEMISTRY vol. 11, 1 Juillet 1961, LONDON GB pages 246 - 265 HERSCH 'AN EXPERIMENTAL SURVEY OF RUST PREVENTIVES IN WATER II THE SCREENING OF ORGANIC INHITORS'
- CHEMICAL ABSTRACTS, vol. 114, no. 22, 3 Juin 1991, Columbus, Ohio, US; abstract no. 212091c, FUJITA TOSHIO 'CORROSION PREVENTION BY NONANOIC ACID SALTS' page 307 ;
- WERKSTOFFE UND KORROSION vol. 42, no. 9, Septembre 1991, WEINHEIM DE page R197 , XP00252484 S. H. TAN 'ORGANIC CORROSION INHIBITORS FOR MILD STEEL IN AERATED NEAR-NEUTRAL CHLORIDE SOLUTIONS'

## Description

La présente invention a pour objet l'utilisation pour l'inhibition de la corrosion du cuivre d'une composition consistant en acide heptanoïque ou un de ses dérivés et tetraborate de sodium.

On sait que dans de nombreuses utilisations, notamment à titre d'exemple non limitatif dans les systèmes de réfrigération à circulation d'eau faisant emploi d'antigels, et entre autres dans les circuits de réfrigération automobiles, les acides carboxyliques et dicarboxyliques et les sels de tels acides sont très largement employés à titre d'agents inhibiteurs de la corrosion. Aussi, ces acides sont utilisés en tant qu'inhibiteurs de la corrosion atmosphérique et à cette fin sont appliqués sous forme de revêtement sur les matériaux à protéger. Les dérivés liposolubles d'acide carboxylique sont aussi utilisés pour la protection dite de type huileuse, par exemple pour la protection des pièces mécaniques de moteurs.

Ainsi, entre autres, le USP 4 561 990, que l'on introduit ici à titre de référence, décrit-il l'emploi d'acide dicarboxylique à cette fin. De même, USP 4 851 145 décrit à cette fin l'emploi d'acide alkylbenzoïque ou d'un de ses sels, USP 4 588 513 l'emploi d'acides dicarboxylique ou de ses sels. Actuellement, l'acide dicarboxylique le plus utilisé est l'acide en C12, pourtant d'un coût élevé.

Le document US-P-4 687 634 décrit des compositions inhibitrices de la corrosion comprenant: (1) une quantité majoritaire d'un support oléagineux; une quantité minoritaire (2) d'un cosolvant hydrophile soluble dans l'huile et (3) d'un sel d'acide organique en C₇ et de dicyclohexylamine. La protection est aussi de type huileuse.

EP-0 251 480 décrit des compositions ternaires comprenant un dérivé de triazole, que l'on cherche à éliminer aujourd'hui en raison des réglementations protectrices de l'environnement.

S.H. Tan et al., CASS 90: Corrosion-Air, Sea, Soil [Proc. Conf.] Auckland, NZ, 19-23, Nov. 1990, décrivent des tests relatifs aux capacités inhibitrices de divers constituants organiques, dont les familles des acides monocarboxyliques en C₆ à C₁₀ et dicarboxyliques en C₇ à C₁₂.

Werkstoffe und korrosion, Vol. 42, No 9, Septembre 1991, évalue l'effet anti-corrosion des mono- et dicarboxylates d'alkyles à chaine linéaire et indique notamment que l'inhibition maximale est obtenue, dans le cas des carboxylates d'alkyles linéaires, avec les monocarboxylates en C₆-C₁₀.

EP-A-0229440 décrit des compositions utilisées dans les systèmes de refroidissement qui comprennent un inhibiteur de corrosion constitué de 0,1 à 15% en poids (par rapport à l'acide libre) d'un acide monobasique aliphatique en C₅-C₁₆ ou d'un sel d'amine, d'ammonium ou de métal alcalin de cet acide; de 0,1 à 15% en poids d'un acide dibasique en C₅-C₁₆ aliphatique ou aromatique; et un hydrocarbyl triazole.

EP-A-0308037 décrit une formulation anti-congélation inhibant la corrosion qui contient une proportion majeure d'un agent abaissant le point de congélation, un acide monobasique aliphatique en C₆-C₁₂ ou un sel de métal alcalin de cet acide, un dérivé de borate d'un métal alcalin et un hydrocarbyltriazole. L'acide monobasique aliphatique préféré correspond à l'acide octanoïque et plus particulièrement à l'acide éthylhexanoïque.

GB-961409 décrit une composition inhibant la corrosion contenant un tellurite, du borax et de l'acide heptanoïque.

Le brevet FR-A-2 257 703 revendique des compositions comprenant des acides de la famille des acides en C₅ à C₉. Néanmoins, ces brevets n'apportent pas une solution à tous les problèmes liés à l'emploi d'agent anti-corrosion. Tout d'abord, dans le cadre d'une réglementation de la protection de l'environnement de plus en plus stricte, les additifs anti-corrosion doivent être biodégradables. Dans le cas d'une action anti-corrosion en eaux dures, c'est-à-dire très calcaires, l'ajout d'agents complexants du calcium est souvent requis afin d'éviter la précipitation de l'additif anti-corrosion. Cet ajout de complexant rend la composition plus complexe. Souvent la protection des métaux ferreux et non ferreux implique des mesures différentes et des formulations contenants des agents de types divers sont alors requis. Les formulations anti-corrosion actuelles sont des compositions complexes différant selon les usages auxquels elles sont destinées.

Les travaux qui ont conduit à la présente invention ont montré, de façon tout à fait inattendue, et en tout cas de façon surprenante, que dans cette application d'inhibition de la corrosion l'acide heptanoïque en combinaison avec le tetraborate de Na donne lieu à une action inhibitrice nettement améliorée et imprévisible et permet d'obvier les inconvénients mentionnés ci-dessus.

L'invention a en fait pour objet l'utilisation pour l'inhibition de la corrosion du cuivre d'une composition consistant en acide heptanoïque ou un de ses dérivés et tétraborate de sodium, telle que définie dans les revendications 1-6.

Selon une forme d'exécution de la composition utilisée dans la présente invention, l'acide heptanoïque ou ses dérivés sont sous une forme hydrosoluble.

Selon une variante de cette forme d'exécution de la présente invention, la forme hydrosoluble de l'acide heptanoïque consiste en le sel d'un métal alcalin ou alcalino-terreux, avantageusement le sodium.

La présente invention a pour objet l'application de la composition précitée à l'inhibition de la corrosion de circuits de réfrigération, notamment de circuits de réfrigération automobiles.

La présente invention est en fait basée sur la constatation surprenante et inattendue que l'acide heptanoïque ou ses sels en combinaison avec le tetraborate de sodium donne lieu à une action inhibitrice améliorée de la corrosion.

En fait, un dérivé tel que l'heptanoate de sodium donne d'excellents résultats, ainsi qu'il est démontré ci-dessous. Des tests similaires peuvent être réalisés avec d'autres dérivés hydrosolubles du même acide heptanoïque (C₇), en particulier des sels de métaux alcalins et alcalino-terreux et les sels d'hydroxylamine, par exemple d'éthanolamine.
De préférence, le pH de la composition est d'environ 8.

La disponibilité pratique des coupes en C₇ pures est possible à partir du craquage de l'huile de ricin. Elle est également possible par addition de CO sur une alpha-oléfine en C₆.
Toutes ces coupes peuvent être utilisées en tant qu'acide heptanoïque pour leur efficacité anticorrosion.
Les formules anticorrosives proposées ici ont le mérite d'être simples à contrôler, à réaliser et à mettre en oeuvre. Tel n'est pas le cas de nombreuses formulations complexes où certains composants sont nécessaires pour éliminer les inconvénients de certaines matières actives.

D'autres buts et avantages de la présente invention apparaîtront à la lecture de l'exemple suivant et des résultats des essais effectués à titre d'exemples non limitatifs.

En fait, les résultats consignés dans les tableaux sont obtenus par mise en oeuvre de la norme ASTM D-1384 pour le contrôle du niveau de protection des liquides de refroidissement pour automobiles. Il est évident que ces tests auraient pu être effectués sur d'autres systèmes que les systèmes automobiles et qu'il ne faut donc en aucun cas considérer que l'invention est limitée à la protection à l'égard de la corrosion des circuits de réfrigération automobiles, ou même plus généralement des circuits de réfrigération dont le fluide réfrigérant serait de l'eau ou une solution aqueuse.

### EXEMPLE

On met en oeuvre un test sur une installation industrielle. On obtient les résultats suivants pour une immersion prolongée pendant un mois dans de l'eau avec électrolyte.

| Produits | comparatif NaClO₄ 0,1M | | comparatif Na₂SO₄ 0,1M | | Na₂B₄O₇ 0,1M |
|---|---|---|---|---|---|
| TAMPON/HEPTANOATE | 0 | 0 | 0 | 0,08M | 0,08M |
| ASPECT corrosion | | | | | |
| OUI | X | X | X | | |
| NON | | | | X | X |

Les solutions salines attaquent donc le cuivre, et la présence d'heptanoate de Na à une concentration de 1% et du tétraborate de sodium permet d'éviter toute corrosion. Aucune attaque n'est observée en surface, et les pièces restent parfaitement propres avec une faible addition de sel de C₇.

La stabilité des couches protectrice a été également mesurée par ATG, mettant en évidence une parfaite stabilité jusque 200°C.

Sans vouloir être liée par aucune théorie, la demanderesse pense que toute se passe comme si, selon les caractéristique du métal cuivre, la présence d'oxydant puissant générait le cation métallique en solution. Ensuite, le cation forme un composé stable avec l'anion de la forme acide qui est présent dans le milieu compte tenu du pH de la solution. Le sel ainsi formé, hydrophobe, semble alors se recombiner immédiatement avec la couche métallique d'origine. Ce mécanisme est l'équivalent conceptuel d'un traitement connu de phosphatation ou de chromatation pour les métaux, mais de façon plus douce. Le mode de dissolution/combinaison/refixation sur la masse métallique se ferait par adsorption simple au lieu d'un mécanisme de développement des couches de protection par croissance cristalline à partir du métal pur.

## Revendications

1. Utilisation pour l'inhibition de la corrosion du cuivre d'une composition consistant en acide heptanoïque ou un de ses dérivés et tétraborate de sodium.

2. Utilisation selon la revendication 1, dans laquelle l'acide est sous forme de dérivé hydrosoluble.

3. Utilisation selon la revendication 2, dans laquelle le dérivé hydrosoluble est un sel d'un métal alcalin ou alcalino-terreux.

4. Utilisation selon la revendication 3, dans laquelle le sel d'un métal alcalin ou alcalino-terreux est le sel de sodium.

5. Utilisation selon l'une quelconque des revendications 1 à 4, dans laquelle le pH de la composition est d'environ 8.

6. Utilisation pour l'inhibition de la corrosion du cuivre d'une composition aqueuse qui comprend de 0,1 à 10% en poids d'une composition selon l'une quelconque des revendications 1 à 5.

## Patentansprüche

1. Verwendung für die Inhibierung der Kupferkorrosion einer Zusammensetzung bestehend aus Heptansäure oder dessen Derivate und Natriumtetraborat.

2. Verwendung gemäß Anspruch 1, wobei die Säure als wasserlösliches Derivat vorliegt.

3. Verwendung gemäß Anspruch 2, wobei das wasserlösliche Derivat ein Salz eines Alkalimetalls oder Erdalkalimetalls ist.

4. Verwendung gemäß Anspruch 3, wobei das Alkalimetall- oder Erdalkalimetallsalz das Natriumsalz ist.

5. Verwendung gemäß mindestens einem der Ansprüche 1 bis 4, wobei die Zusammensetzung einen pH von ungefähr 8 aufweist.

6. Verwendung für die Inhibierung der Kupferkorrosion einer wäßrigen Zusammensetzung, welche 0,1 bis 10 Gew.-% einer Zusammensetzung gemäß mindestens einem der Ansprüche 1 bis 5 umfasst.

## Claims

1. The use, for inhibiting corrosion of copper, of a composition consisting of heptanoic acid or one of the derivatives thereof and sodium tetraborate.

2. The use according to claim 1, wherein the acid is in the form of a water-soluble derivative.

3. The use according to claim 2, wherein said water-soluble derivative is an alkali or alkaline-earth metal salt.

4. The use according to claim 3, wherein said alkali or alkaline-earth metal salt is the sodium salt.

5. The use according to any one of claims 1 to 4, wherein said composition has a pH of about 8.

6. The use for inhibiting corrosion of copper of an aqueous solution comprising 0.1 to 10% by weight of a composition according to any one of claims 1 to 5.
